# EUROPEAN PATENT APPLICATION

(11) **EP 4 276 555 A1**
(43) Date of publication of application: **15.11.2023**
(21) Application number: 22305697.9
(22) Date of filing: 11.05.2022
(51) Int. Cl.: G05B 19/4093

(54) **A METHOD FOR SURFACING A LENS BLANK WITH A CUTTING TOOL**

(71) Applicant: Essilor International, 94220 Charenton-Le-Pont (FR)
(72) Inventor: PINAULT, Sebastien, 91310 LONGPONT SUR ORGE (FR); BESSONNET, Stephane, 94000 CRETEIL (FR); MOINE, Jérôme, 94410 SAINT MAURICE (FR); MARTIN, Luc, 91470 FORGES LES BAINS (FR); CASTRO MARTINEZ, Luis Ricardo, 94100 SAINT MAUR DES FOSSES (FR)
(74) Representative: Korakis-Ménager, Sophie

(57) **Abstract**

A computer-implemented method for determining a compensated surface description data intended to be loaded into a surfacing machine to obtain a surface of an optical element by cutting a blank with a cutting tool of the surfacing machine, the method comprising:
- providing a surface description data,
- providing contact data from the surface description data,
- generating a compensation map by using a transfer function,
- determining a compensated surface description data from the generated compensation map and the surface description data.

## Description

### TECHNICAL FIELD

The present invention is in the ophthalmic field and it relates to a computer-implemented method for determining a compensated surface description data, the compensated surface description data representing a surface of an optical element to be obtained by cutting a blank with a cutting tool of a surfacing machine. The present invention is also related to a computer program product comprising a series of instructions which, when loaded on a computer, results in the execution by said computer of the steps of the methods according to the description, and a system comprising the computer program product.

### BACKGROUND

In general, a spectacle lens is specifically manufactured according to every wearer's needs which may take the form of specifications defined in a prescription established by an ophthalmologist or an optometrist.

For the manufacturing of a lens, a lens blank is submitted to various steps to form the desired lens, in particular one, surfacing step, also called cutting step, during which the shape of the lens blank is processed to produce what can be referred to as a surfaced lens so that the latter exhibits desired optical properties. The shape of the surface of the lens or the lens blank may be obtained by directly cutting the surface or may be obtained by molding via a mold previously cut according to the desired optical properties.

In practice, such as an operation may be carried out on a blank or a semi-finished lens blank whose front surface has previously been processed, the operation of surfacing essentially impacts one of the surfaces of the lens blank, typically the back surface, according to the prescription.

In addition to the required desired optical properties, the surface quality obtained must be such that no irregularity occurs which would be transmitted to the resulting product and would conduct to digress from the required desired optical properties. Indeed, the resulting product may be very sensitive to these surface irregularities. There is therefore a need for a method that makes it possible to reduce these surface irregularities.

The irregularities may have several origins. In particular, the operation of surfacing is a turning operation with a cutting tool such as a diamond tool. The cutting tool has an edge in contact with the blank lens during the cutting step. The contact point between the lens blank and the cutting tool is moving along the edge of the cutting tool. It results to a non-equal state of wear along the cutting tool edge depending of the surfaced lens. Consequently, the non-equal state of wear along the surfacing tool edge introduces irregularities along the surfacing tool edge and the irregularities are replicated to the lens surface. Thus, it can lead to local or global surface irregularities like wrong power, rings and center irregularities.

In order to obtain suitable products with no irregularity, the precision required is of the order of a micron.

To obtain such precision, the application FR2984197 describes a method related to the correction of surface irregularities introduced in a reproducible manner, the method comprising a step of determining a surface irregularity of the surfaced lens and a transformation step by compensating the surface irregularity of the surfaced lens with means of an irregularity model. However, this method deals with the surface irregularity of the surfaced lens and not with the origin of the surface irregularity such as the irregularities of the surfacing tool.

There is a need for a method and a system that deals directly with the irregularities originated from the surfacing tool in order to increase the precision of the final lens and reduce the rejected lens.

### SUMMARY

The goal is obtained according to the present disclosure thanks to a computer-implemented method for determining a compensated surface description data intended to be loaded into a surfacing machine to obtain a surface of an optical element by cutting a blank with a cutting tool of the surfacing machine, the method comprising:
- providing a surface description data,
   the surface description data representing the surface of the optical element;
- providing contact data from the surface description data,
   the contact data representing the contact points to obtain with the cutting tool the surface represented by the surface description data,
   the contact point being the contact point between the cutting tool and the surface of the blank to obtain the surface of the optical element, and
   the contact point being defined in a cutting tool coordinate system;
- generating a compensation map by using a transfer function,
   the input of the transfer function being at least the contact data and the output of the transfer function being the compensation map;
- determining a compensated surface description data from the generated compensation map and the surface description data.

In the present disclosure, "optical element" means lens, semi-finished lens or a mold to manufacture lens or semi-finished.

In the present disclosure, "blank" means semi-finished lens or blank for manufacturing a lens or blank for manufacturing a mold to manufacture lens or semi-finished.

In the present disclosure, the contact data is the contact points to obtain with the cutting tool the surface represented by the surface description data. The contact point is the contact point between the cutting tool and the surface of the blank to obtain the surface of the optical element. The contact point is defined in a cutting tool coordinate system.

The cutting tool coordinate system may be a cartesian or a polar coordinate system. The origin of the cutting tool coordinate system is fixed relatively to the cutting point, in other word fixed in the cutting tool coordinate system. When the cutting tool moves relatively to the surfacing machine, the origin of the cutting tool coordinate system moves with the cutting tool and remains fixed in the cutting tool coordinate system. The origin may be defined in the cutting tool as the center of the cutting tool or outside the cutting tool.

The contact data may be defined as a contact angle data in a polar coordinate system.

To surface the blank with the cutting tool, the blank may be rotated or the cutting tool may be rotated. When the blank is rotated, the surfacing machine may have a rotation axis around which the blank to cut rotates. When the cutting tool is rotated, the surfacing machine may have a rotation axis around which the cutting tool rotates. According to the embodiments, the blank and/ or the cutting tool may be moves according to at least one or two or three (x, y, z) or four degrees of freedom.

According to the disclosure, it is possible to limit the optical power defects on the ophthalmic device to be manufactured by considering the cutting tool and the errors originated from the cutting tools, in particular by recalculating the position of the tool during the cutting step to manufacture the given ophthalmic device according to the contact point defined in the cutting tool coordinate system.

Furthermore, by recalculating the position of the cutting tool according to the contact point defined in the cutting tool coordinate system, the method allows to be universal and applicable to any kind of surfacing machine.

The step of generating a compensation map, may comprise further:
- providing a material description data,
   the material description data representing the material of the cutting tool and/or the material of the blank and/or the interaction between the material of the blank and the cutting tool during the cutting of the blank to obtain the optical element,
- determining the transfer function based at least on the provided material description data.

In the present disclosure, "the interaction of the material between the material of the blank and the cutting tool" means the behavior of the material of the blank when this last one interacts with the material of the cutting tool in given conditions of wear and reciprocally.

The material description data may be for the cutting tool and/or the blank: the ductility, the hardness, the elasticity, the fragility, the malleability, the resilience, the rigidity, the viscosity.

The inventor has shown that the material of the tool cutting and/or the interaction of the material between the material of the blank and the cutting tool, modify the tool wear effect and consequently may introduce errors during the manufacturing step if this parameter is not taking into account. This embodiment presents the advantage to limit the irregularities related to the material description of the cutting tool.

The step of generating a compensation map, may comprise further:
- providing a reference element description data, the reference element data representing the surface of an element previously cut by the cutting tool;
- determining the transfer function based at least on the provided reference element description data.

Thus the reference element allows adjusting the transfer function accurately.

The reference element description data may provide the material description data.

The step of generating a compensation map, may comprise further:
- providing a predictive model, the predictive model predicting a wear of the cutting tool in given conditions,
- determining the transfer function based at least on the predicted wear of the cutting tool.

Thus the predictive model allows adjusting the transfer function based on the previous cutting experience.

The predictive model may be a trained machine learning or a simulation in order to be able to adjust the transfer function to unknown conditions.

The step of generating a compensation map, may comprises further:
- providing a cutting speed and/or a cutting depth at each contact point;
- determining the transfer function based at least on the provided cutting speeds.

In the present disclosure, the cutting speed is the relative speed between the cutting tool and the blank at a contact point during the cutting of the blank to obtain the optical element. It may be defined also as the speed at which the material is removed by the cutting tool from the blank.

In the present disclosure, the cutting depth is the amount of material removed per pass of the cutting tool. It can vary and depending upon the type of tool and blank material.

By taking into account the cutting speed and the cutting depth, the errors related to the cutting of the tools are decreased and the cutting step is more accurate on all the surface.

The step of generating a compensation map by using a transfer function, may comprise further
- providing a compensation model to compensate for defects produced by a manufacturing method,
- generating a compensation map by using a transfer function and the provided compensation model.

According to this embodiment, furthermore the errors related to the cutting to the tool, it is possible to take into account any kind of defects produced by a manufacturing method and consequently, to limit the optical defect of the final product.

The computer-implemented method may comprise further:
- providing an optical power description data;
- providing an opposite surface description data, the opposite surface description data representing the opposite surface of surface to be obtained;
wherein the step of providing a surface description data comprises:
- determining the surface description data from the opposite surface description data and the optical power description data.

The optical power description data is the repartition of the optical power of the optical element. The optical power description data may be the optical power of the optical element to be obtained. The optical power may be obtained from the prescription of the wearer or from the required design of the optical element to be obtained.

Providing an opposite surface description data may be measuring the opposite surface.

This embodiment allows taking into account the cutting of the opposite surface to determine the surface description data of the surface to be obtained.

The providing of the opposite surface description data may be obtained by measurement or by simulation.

The opposite description may comprise the errors of the opposite surface.

The steps of providing a contact data may comprise further:
- providing a cutting tool description data to provide the contact data, the cutting tool description data representing at least a part of an edge of the cutting tool, said edge of the cutting tool being intended to be in contact with the blank during surfacing.

The disclosure also provides, according to a second aspect, a surfacing machine for surfacing a blank to obtain a surface of an optical element by cutting a blank with a cutting tool of the surfacing machine, the system comprising
a cutting tool to cut the blank to obtain a surface of an optical element,
a computer, and
a computer program product comprising a series of instructions,
wherein said instructions, when loaded in the computer, are capable of implementing the steps of a method for determining a compensated surface description data intended to be loaded into the surfacing machine, the method comprising:
- providing a surface description data, the surface description data representing the surface of the optical element, and being not depend on the cutting tool;
- providing contact data from the surface description data,
   the contact data representing the contact points to obtain with the cutting tool the surface represented by the surface description data,
   the contact point being the contact point between the cutting tool and the surface of the blank to obtain the surface of the optical element, and
   the contact point being defined in a cutting tool coordinate system;
- generating a compensation map by using a transfer function, the input of the transfer function being at least the contact data and the output of the transfer function being the compensation map;
- determining a compensated surface description data from the generated compensation map and the surface description data.

The method loaded into the surfacing machine may comprise further
- providing a material description data, the material description data representing the material of the cutting tool and/or the material of the blank and/or the interaction between the material of the blank and of the cutting tool during the cutting of the blank to obtain the optical element;
- determining the transfer function based at least on the provided material description data.

The surfacing machine may comprise further a reference sensor to probe at least one reference element and to generate a reference element description data,
the reference element being obtained from a blank surfaced with the cutting tool of the system, the transfer function being determined based at least on the provided reference element description data.

The system may comprise further a cutting tool sensor to probe the cutting tool, in order to provide the surfacing tool description data.

The disclosure further provides, according to a third aspect, a computer program product comprising a series of instructions which, when loaded on a computer, results in the execution by said computer of the steps of the methods according to the description, and a system comprising the computer program product.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
Figure 1 partially and schematically depicts a manufacturing system such as a digital surfacing machine, configured to carry out steps of a method for manufacturing a part which is an optical element according to the disclosure.
Figure 2A partially and schematically depicts the cutting tool of the surfacing machine illustrated on Figure 1, which face an optical element to be manufactured, which is fixed on a lens holding system;
Figure 2B partially and schematically depicts two contact angles of the cutting tool of the figure 2A at two different contact points;
Figure 3 is a block diagram illustrating operating steps of the method for determining a compensated surface description data intended to be loaded into a surfacing machine as represented in figure 1 to obtain a surface of an optical element by cutting a blank with a cutting tool of the surfacing machine according to the present disclosure.
Figures 4A and 4B represent two horizontal and vertical cross-sections from two compensation map according to the present disclosure.
Figures 5A and 5B represent the measurement of the surface of a reference element according to the present disclosure.
Figure 6 illustrates a surface which may be used for the surface of the reference element according to the present disclosure.
Figure 7 illustrates the Z difference at different tool angles according to the present disclosure.

### DETAILED DESCRIPTION OF EMBODIMENTS

In the description which follows the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts.

Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

To avoid unnecessary details for practicing the invention, the description may omit certain information already known to those skilled in the art.

The disclosure is directed to a method for manufacturing an ophthalmic element comprising a machining step, in particular a cutting step also called a surfacing step.

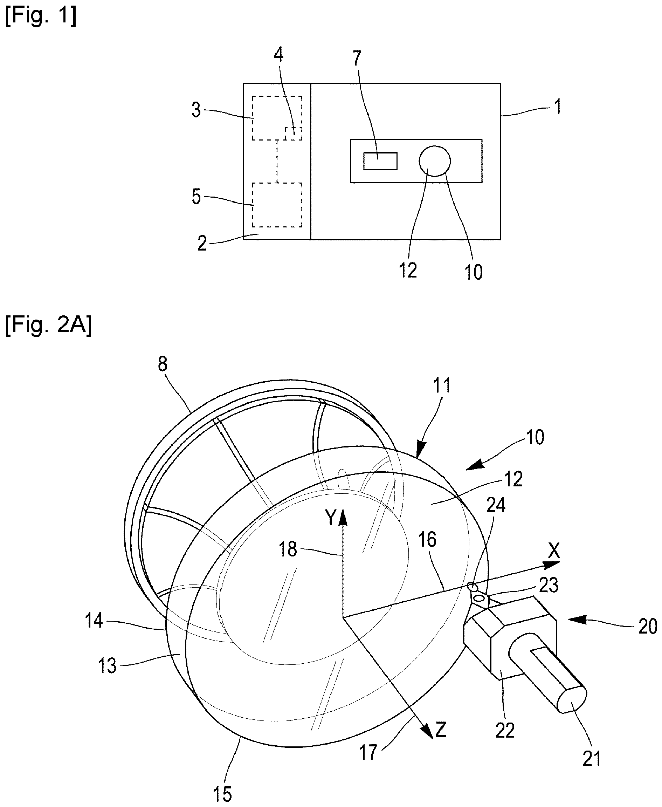

Figure 1 shows a system for manufacturing an optical element 10, comprising a numerical-control "free-form" surfarcing machine 1, numerical control denoting the set of equipment and software, the function of which is to give movement instructions to all the elements of the surfacing machine 1 .

This surfacing machine 1 is configured for machining by turning and/or surfacing and optionally polishing) at least one surface on at least one face 12 of an optical article 10.

The surfacing machine 1 comprises a moveable machining arm 7 and a data processing system or a control unit (not shown) configured for controlling the moveable arm 7. The system further comprises system parts generally formed by at least one control unit 2 configured to communicate with the data processing system (or control unit) of the surfacing machine 1.

The control unit 2 comprises a microprocessor 3 having a memory 4, in particular a non-volatile memory, allowing it to load and store software, in other words a computer program, which when it is executed in the microprocessor 3, allows the implementation of a manufacturing method according to the invention.

This non-volatile memory 4 is for example of the ROM ("read only memory") type.

The control unit 2 further comprises a memory 5, in particular a volatile memory, allowing data to be stored during the execution of the software and the implementation of the method.

This volatile memory 5 is for example of the RAM or EEPROM type (respectively "random access memory" and "electrically erasable programmable read only memory").

The control unit may be only at least partially integrated into the machine. In other words, the control unit may be arranged in part, or in whole, outside the machine.

The control unit 2 can form at least partially a part of the surfacing machine 1 and may comprise one or a plurality of control modules located inside and/or outside the machine.

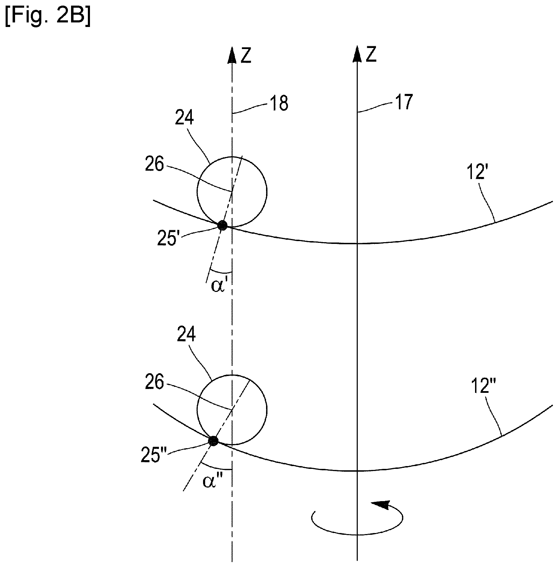

The optical article 10 can be an ophthalmic lens and/or a checking piece. In the case of an ophthalmic lens, the machine 1 can also be configured for polishing the face 12 and/or for edging a peripheral edge 13 (see Figure 2) in order to form the ophthalmic lens.

The moveable machining arm 7 is configured to bear at an end a device 20 comprising a lens machining tool 24 (Figure 2A) and the control unit 2 is configured to control each of the steps of a machining method by surfacing a surface of an ophthalmic lens, using the lens machining tool 24 in the surfacing machine 1. Figure 2A shows a lens holding system 8 of the surfacing machine 1 which is configured to block in a predetermined position the optical article, here formed by blank 10 used for forming an ophthalmic lens. The moveable machining arm may be for example a slow or a fast tool servo. The arm 7 can be a slow or a fast tool servo.

The blank 10 comprises an upper face 12, a lower face 11 opposite to the upper face 12 and a peripheral edge 13 linking the lower and upper faces 11 and 12.

The upper face 12 is configured to form a first face, also named rear face and the lower face 11 is configured to form a second face, also named front face. The second face is opposite to the first face.

The peripheral edge 13 is configured to form a peripheral outline having a first edge 15 linking the peripheral edge 13 to the first face 12 and a second edge 14 linking the peripheral edge 13 to the second face 11.

Here, the blank 10 has the second face 11 and the first face 12 which are both planar. The blank may take any ophthalmic geometry such as curved face or with discontinuous or micro structured face.

The lens holding system 8 comprises for instance an adhesive film (not represented) which has an adhesive face configured to be fixed on the lower face 11 of the blank 10. Regarding the lens holding system, any blocking technology may be used. A first example is the alloy technology that uses an adhesive film (not represented) which has an adhesive face configured to be fixed on the lower face 11 of the blank 10. A second example is the glue technology that uses a kind of glue (not represented) that sticks on the lower face 11 of the blank 10.

The lens holding system may be configured to receive the blank 10 for first roughing such as milling, then machining by surfacing the first face 12 by using the device 20 in order to form a semi-finished lens. Next, the lens holding system 8 may be configured to receive the semi-finished lens for machining by surfacing the second face 11 by using the same device 20 in order to form the ophthalmic lens, for example the front face. A preliminary step may be first roughing the first face or the second face such as milling.

The lens holding system 8 is configured to be mounted on a spindle axis of the machine 1, spindle axis which rotates during the step of manufacturing the blank 10, for rotating the blank 10 on itself during the machining.

The machine 1 comprises three directions, respectively a first direction 1 6, namely X-direction, a second direction 1 8 perpendicular to the first direction 1 6, namely Y-direction, and a third direction 17 perpendicular both to the first and second directions 1 6 and 18, namely Z-direction.

The location of the lens machining tool 24 is defined according to the three directions 1 6 to 18 in the surfacing machine. The Z-direction 17 corresponds here to a turning axis, also named turning center or rotating axis, of the blank 10.

The device 20 may comprise a pin 21 configured to be fastened to the moveable machining arm 7, a base 22 from which protrudes the pin 21, a tool support 23 formed by a projection of the base 22, at the opposite of the pin 21 , and the lens machining tool 24 fixed to the tool support 23.

The lens machining tool 24 may be of the half-radius type or of the full-radius type and has generally a predetermined aperture (in degrees).

A lens machining tool of a full-radius type may be mounted on the device 20 so that the tool 24 is inclined relative to the tool support 23 in order to form a tool having an aperture arranged asymmetrically. The aperture asymmetry arrangement can be defined according to a plan comprising the turning axis 17 (or Z-direction), the Y-direction 18 and the tool center.

Figure 2B partially and schematically depicts two contact angles α', α" of the cutting tool of the figure 2A at two different contact points 25' and 25". Figure 2B helps to define a contact point and a contact angle. The upper figure is related to a surface 12' with a low curvature. The bottom figure is related to a surface 12" with a high curvature. On this figure, the turning axis 17 in the Z direction, also called rotation axis, is also represented. A parallel axis of the rotation axis 18 in Z direction is represented to help the understanding. The cutting tool 24 is schematically represented by a circular shape. The contact points 25' and 25" are the contact point between the cutting tool and the surface. The tool angle α', α" is defined as the angle between the rotation axis 17, 18 and the axis passing through a reference point 26 of the cutting tool 24 and the contact point 25', 25". As the axis 17 and 18 are parallel, the angles are the same between the axis 18 or between the axis 17. The reference point may be the center of the cutting tool or any other points of the cutting tool if it remains the same for each contact point in the referential of the cutting tool. As shown, the contact angle depends on the position of the contact point. Consequently, the contact angle may depend on the curvature of the surface and/ or the position of the cutting tool on the surface.

Thus, as explained, the actual final step of surface generating in Rx Labs is a turning operation with a cutting tool. At the beginning, this cutting tool may be approximately considered circular (for example radius from 30µm to 12mm, preferentially 2 to 5 mm) based on the specification provided by the manufacturer of the cutting tool. During turning (also called surfacing or cutting) the contact point between the blank and the cutting tool is moving along that circular part. It results in a non-equal state of wear along the tool radius depending on the surface to be obtained.

Tool circularity defect is replicated to the cut surface and can lead to local or global surface defects like wrong power, rings and center defects on the lens or the semi-finished lens. Similar defects could be generated on the semi-finished mold surface. It may cause wrong power on the lens.

The inventors showed that to resolve this problem, a solution may be to consider the cutting tool when calculating the surface description data intended to be loaded into the surfacing machine circular part. Thus tool position is recalculated to compensate for the effect of the cutting tool. The tool position recalculated may be X or Y position, preferentially the Z tool position or combination of X/Y/Z positions or any other kind of liberty degree position.

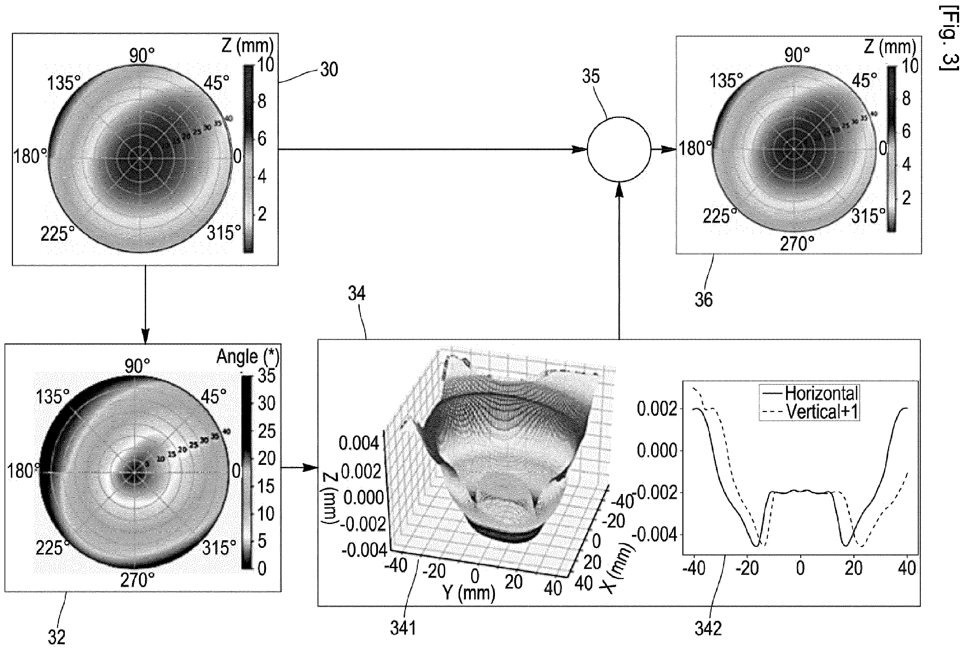

Figure 3 is a block diagram illustrating operating steps of the method for determining a compensated surface description data intended to be loaded into a surfacing machine as represented in figure 1 to obtain a surface of an optical element by cutting a blank with a cutting tool of the surfacing machine according to the present disclosure. Figure 3 presents the global solution with blocks and examples into the blocks. The solution is based on the computation of the compensation map of the position of the cutting tool.

The compensated surface description data represents a surface of an optical element to be obtained by cutting a blank with a cutting tool of a surfacing machine.

The compensated surface description data is shown in block 36. The compensated surface description data depends on the cutting tool. As explained before, in particular, the compensated surface description depends on the contact point of the cutting tools. The compensated surface description data is intended to be loaded into the surfacing machine.

Figure 3 shows the main step of the method which comprises the step of:
- providing a surface description data 30,
   the surface description data representing the surface of the optical element;
- providing contact data from the surface description data 32,
   the contact data representing the contact points to obtain with the cutting tool 24 the surface represented by the surface description data,
   the contact point 25', 25" being the contact point between the cutting tool 24 and the surface 12, 12', 12" of the blank 10 to obtain the surface of the optical element, and
   the contact point being defined in a cutting tool coordinate system;
- generating a compensation map by using a transfer function 34,
   the input of the transfer function being at least the contact data and the output of the transfer function being the compensation map;
- determining a compensated surface description data 36 from the generated compensation map and the surface description data.

Diamond turning operation (also called cutting or surfacing operation) is key to guarantee final optical properties of lenses. Tool wear mechanism is controlled by the distances achieved of each cross section of the cutting radius, by the cutting parameters and by the material mix. When operating, tool wear in every point of the cutting edge could be measured by optical or mechanical probing of a lens or predicted by calculation.

Thus the first step 30 is to provide a surface description data. The surface may be spherical, or aspherical, or a free form surface. The surface description data represents the surface of the optical element. The surface description data is not dependent on the cutting tool. The optical element may be a lens, a semi-finished lens or a mold intended to be used to mold a surface of a lens or a semi-finished lens. As illustrated on Figure 3, the surface description data may be a map in 3 dimensions, X Y in the plan and Z according to the greyscale as the element 34 or cylindrical coordinates as on the elements 30, 32, 36. The X Y may be represented in an angle referential. This kind of representation is well known for the skill of the art. The referential of the surface description may be the referential of the cutting machine or of the blank as illustrated in figure 2A.

The second step 32 is to provide contact data from the surface description data.

In the present disclosure, the contact data is the contact points to obtain with the cutting tool the surface represented by the surface description data. The contact point is the contact point between the cutting tool and the surface of the blank to obtain the surface of the optical element. The contact point is defined in a cutting tool coordinate system.

The cutting tool coordinate system may be a cartesian or a polar coordinate system. The origin of the cutting tool coordinate system is fixed relatively to the cutting point, in other word fixed in the cutting tool coordinate system. When the cutting tool moves relatively to the surfacing machine, the origin of the cutting tool coordinate system moves with the cutting tool and remains fixed in the cutting tool coordinate system. The origin may be defined in the cutting tool as the center of the cutting tool or outside the cutting tool.

To surface the blank with the cutting tool, the blank may be rotated or the cutting tool may be rotated. When the blank is rotated, the surfacing machine may have a rotation axis around which the blank to cut rotates. When the cutting tool is rotated, the surfacing machine may have a rotation axis around which the cutting tool rotates. According to the embodiments, the blank and/ or the cutting tool may be moves according to at least one or two or three (x, y, z) or four degrees of freedom.

The contact data may represent the contact points in function of tool angles to obtain with the cutting tool the surface represented by the surface description data. As explained in Figure 2B, the contact point is the contact point between the cutting tool and the surface and the tool angle is the angle between the rotation axis and the axis passing through a reference point of the cutting tool and the contact point. The map of the tool angle may be represented in the referential of the cutting tool. As illustrated in the block the map of the cutting tool may be represented according to XY in degrees in the plane and Z by the gray scale in degrees. In other words, this step is based on the tool computation of the surface description data. As presented in Figure 2, for each point of the surface description data, the contact point and the contact angle is calculated in order to obtain the contact angle data. To calculate it, the tool may be considered circular or partially circular or elliptical or uncircular; or the tool may be considered spherical or aspherical, preferentially spherical.

The third step 34 is to generate a compensation map by using a transfer function. The input of the transfer function is the contact data and the output of the transfer function is the compensation map. The transfer function may be based on different parameters: material parameters or cutting conditions.

The map compensation may be illustrated in 3 dimensions as on element 341 or in 2 dimensions as on element 342 with the white gray curve representing the Y direction and the dark gray curve representing the X direction. The Z direction is represented for the both with a vertical axis.

According to one embodiment, the transfer function is determined based at least on a material description data. The material description data may be the material of the cutting tool and/or the interaction between the material of the blank and the material of the cutting tool during the cutting of the blank to obtain the optical element.

The material description data may be for the cutting tool and/or the blank: the ductility, the hardness, the elasticity, the fragility, the malleability, the resilience, the rigidity, the viscosity.

Ductility is the ability to stretch without breaking and retain its new shape. Hardness is the ability to resist penetration and scratches. Elasticity is the ability to deform and then return to its original shape. Fragility is the ability to break easily. Malleability is the ability to flatten or bend without breaking and retain its new shape. Resilience is the ability to withstand shocks. Rigidity is the ability to resist deformation.

The material description may depend on the conditions of the cutting step such as temperature, pressure, the solicitation speed, the deformation speed, the cinematic, the cutting depth (depth of cut) or the contact point of the cutting tool.

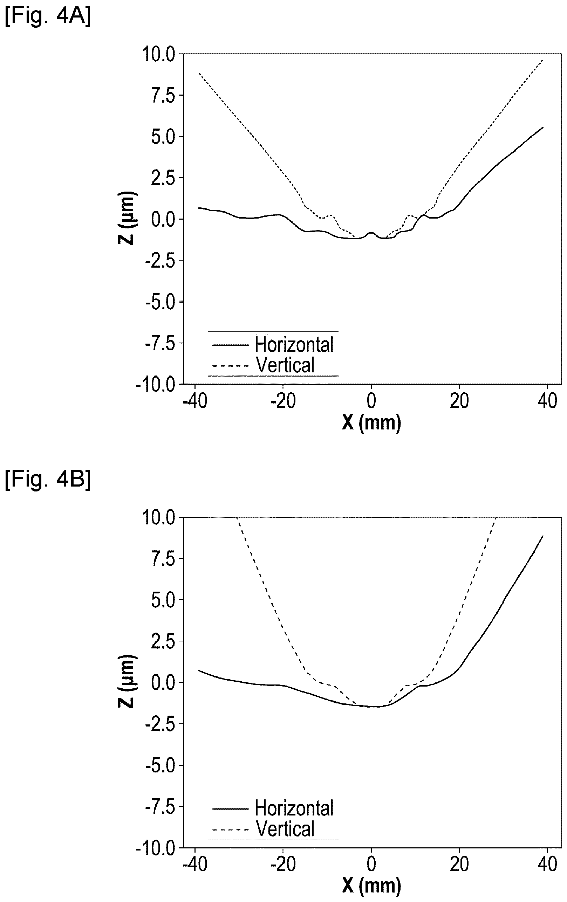

Figures 4A and 4B represent two compensation maps for two different blank materials respectively CR39 and Polycarbonate cutting by the same cutting tool. White gray is the Y direction, dark gray is the X direction and the vertical axis is the Z direction.

As shown on this figure, the compensation map clearly depends on the description material data. The shape of the curve in Figures 4A and 4b are not the same.

The cutting tool material may be a monocrystalline diamond (natural or synthetic), CVD (chemical vapor deposition), a polycrystalline diamond (PCD) or carbide or Boron Nitride cubic (c-BN) or another one.

The blank material may be polymers in the case of lenses, or metals like steel or steel alloy, aluminum, NiP, Nickel alloy, glass, brass or others in the case of molds.

According to another embodiment, taken alone or in combination, the transfer function is determined based at least on a reference element description data. The reference element description data is the surface of an element previously cut by the cutting tool. The reference element description data allow adjusting the transfer function, for example during the tool life or during changing of surface description data to manufacture. There are several ways to obtain the reference element data: first one, characterization model such as optical measurement, surface measurement, or tool edge measurement; second one prediction model.

The reference element may be a reference lens or a reference surface.

For example, when the reference element is a reference lens, the optical measurement of the reference element may be made with an optical device like deflectometry commercial equipment, Dual lens mapper (DLM), Promapper, or Auto mapper or any kind of device with a power mapping to reconstruct a surface which is the reference element description data. Then, thanks to the computation, the difference between the reference element description data and the surface description data used to manufacture the reference element is calculated according to the Z direction and translated on a Z difference surface. Finally, each Z difference is associated to the tool contact point.

The reference element may be totally or partially measured.

This reference lens can be a specific lens or a production Rx lens, spherical or aspherical.

Another example, when the reference element is a reference surface, the reference element is measured with an optical device such as laser profilometer or interferometer, or probe tool inside the cutting machine or outside the surfacing machine or Integrated Topography Measurement. Then, thanks to the computation, the difference between the reference element description data and the surface description data used to manufacture the reference element is calculated according to the Z direction and translated on a Z difference surface. Finally, each Z difference is associated with the tool contact point (which may be tool contact angle). In other words, the Z difference computed is associated to the tool contact angle to evaluate the wear effect on the surface for each tool contact point (which may be tool contact angle) to feed the transfer function of the compensation model.

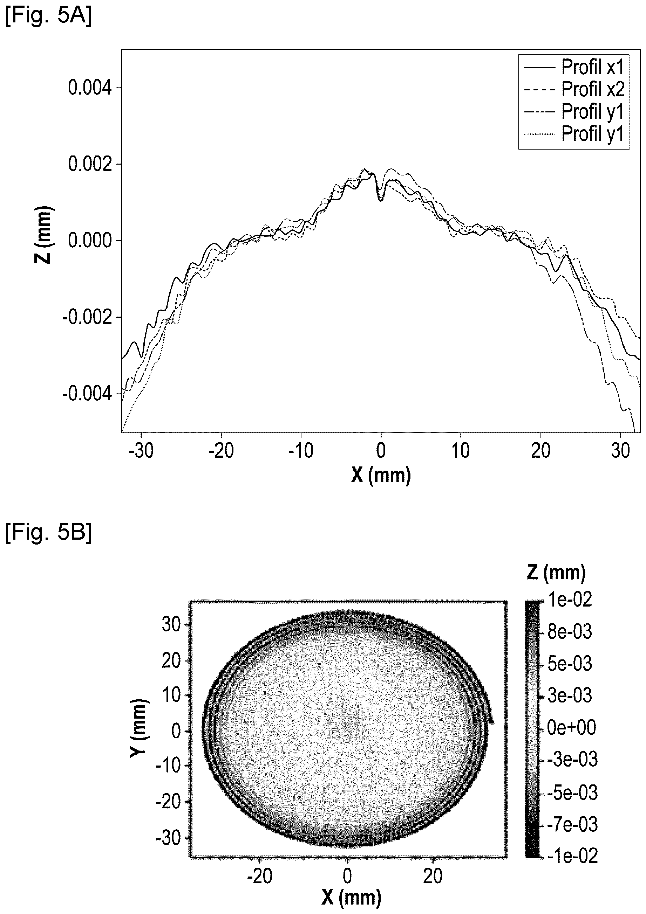

The measurement could be performed on the whole surface or only on one or several diameters (or radius) profiles as illustrated respectively on figures 5A and 5B.

The quality of the measurement may be considered, because all artificial defects will be compensated during the lens manufacture. Those artificial defects can deteriorate the optical power rather than improve it. Thus, the measure could be validated on a criterion: standard deviation, difference between two successive measurements, the data mining, ...

For a deviation of the measurement device, a compensation of this deviation could be corrected on the Z difference. For example, the wear of the probe tool could be evaluated on a standard and removed from the measure.

The reference element description data may provide the material description data if the material of the blank and of the cutting tool are the same as the ones used to obtain the optical element.

The tool wear effect may be applied on the same or similar material's reference surface, to use the tool wear effect on another material.

The material signature may be separated from the tool wear signature because the behavior of the material modifies the tool wear effect.

According to an embodiment, the step of generating a compensation map, may comprises further:
- providing a cutting speed at each contact point, and
- determining the transfer function based at least on the provided cutting speed.

The cutting speed is the relative speed between the cutting tool and the blank in at a contact point during the cutting of the blank to obtain the optical element.

A way to provide the cutting speed may be thanks to the surface of the reference element which may help to dissociate the tool contact point and the low cutting speed for example in the center of the surface. There are different kinds of surface that allow the extraction of this information like a spherical surface, or also a W-surface.

The spherical surface is a revolution surface easily to compute, to manufacture, to measure, and to extract the wear effect. However, it may be the tool angle positive range and the low cutting speed (turning process) may be superposed to the 0° tool angle in the center which is often the most sensitive wear point.

To decorrelate the superposition of the low cutting speed and a 0° tool angle, and/or to access to the negative and positive tool angle in the same surface, a complex surface, called W-surface, composed of a several functions intended to have concavity change, for example combination of polynomials or sinusoidal functions, could be used. This configurable surface is a revolution surface where the diameter curve is defined by:
- Symmetric from the center,
- The maximum tool angle is localized on the edge of the surface,
- With a minimum angle is between the center and the edge of the surface.

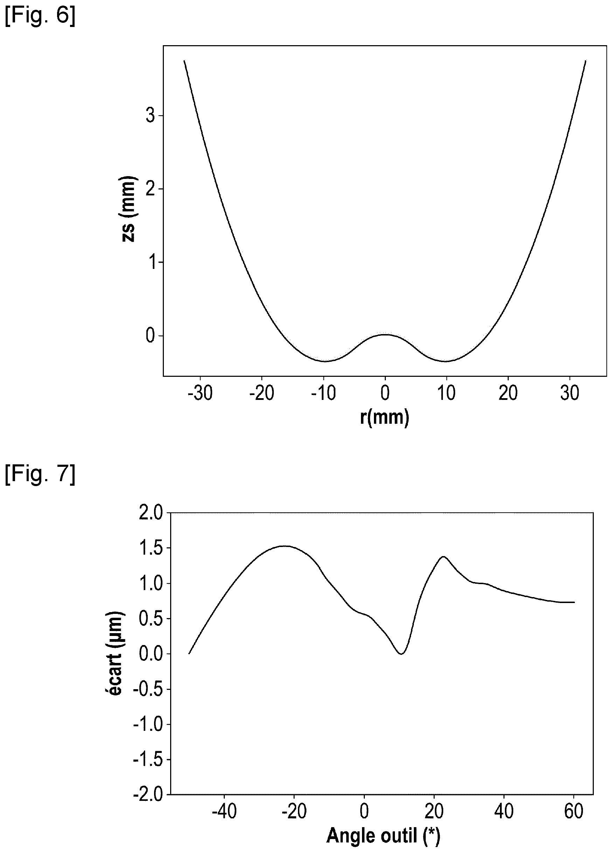

Figure 6 illustrates a W-surface as described above which may be used for the surface of the reference element.

Moreover, there may be an interaction between the cutting and the lens stiffness. Hence, the reference element may be done on a reference lens close to the standard production lenses to get a representative response. For example, the thickness of the lens should be similar to the production lens (for example +/- 10 mm).

The range of the tool angle characterized may depend on the surface of the reference element. More the surface is flat, the lower the range will be. Hence, to compensate for a surface more curved or larger than the reference one, the model could lack data from the not used tool angle. Hence, the compensation map or the transfer function may be extrapolated.

The reference element may be used at different moments of the life of the cutting tool or for each kind of optical element to be manufactured according to the required optical properties.

The reference element may be a specific lens or a specific blank or a semi-finished lens or a specific mold. The reference element may be spherical or aspherical.

The reference element may be a semi-finished lens intended to be used for the manufacturing of an optical element or finished lens.

The reference element may be reused for the manufacturing of an optical element or an another reference element.

The reference element may have a specific geometry according to the wear of the tool.

A new reference element cut or recut by the cutting tools may be used regularly (each week or month or each given number of surfaced optical element or according to the wear of the cutting tools).

The frequency of provided a reference element may be trigged with a trigger based on a drift of a control measurement of an optical element by using optical mapping such as DLM, auto mapper or other or by using surface mapping such as mechanical or optical sensor or by using profile, or by using frontofocimeter or by using a control of the tool (microscope or profile). If we identify a significant drift of this trigger value, then we relaunch the reference surface to readjust the compensation.

According to an embodiment, the step of providing a contact data, may comprises further:
- providing a cutting tool description data to provide the contact data,
   the cutting tool description data representing at least a part of an edge of the cutting tool, said edge of the cutting tool being intended to be in contact with the blank during surfacing.

In fact, the tool wear effect could be compensated from the characterization of the waviness of the tool edge. In fact, a measurement is made on the circular edge part of the tool at different tool angles. The measurement could be made by an optical device like a microscope, a laser or tactile device like a probe tool; an AFM on several cross sections at different wear states. Then, the difference between the waviness and the nominal shape are defined like a Z difference at different tool angles as shown on the illustration Figure 7. As explained before the Z difference may be the difference between the surface description data and the surface of the reference element. For example, the range of the local wear of the cutting edge could be close to 5µm at its end of life. This level of wear may lead to local surface errors. The cutting edge may be not in the exact position expected by the calculator when the radius is worn. Moreover, cutting edge radius wear may be not homogenous along the tool radius. This kind of difference profile of the circularity of the tool transforms with the material to produce the transfer function of the difference on the surface in function of the tool angle.

According to another embodiment taken alone or in combination, as mentioned before, generating a compensation may comprise:
- providing a predictive model, and
- determining the transfer function based at least on the predicted wear of the cutting tool.

The predictive model predicts a wear of the cutting tool in given conditions.

In fact, the ophthalmic company produces hundreds of million lenses with a prescribed correction. Thus based on measurement equipment advances and data mining (Artificial Intelligence), the tool wear could be predicted and also the wear effect on the lens optical function to compute the compensation map.

It is also possible to use a statistical model obtained from the previous products.

The compensation map is the Z difference described before needed to correct the initial surface.

The prediction model could be adjusted by sampling/intermediate measurements during the tool life (hybrid model between prediction and characterization model).

The predictive model may be a trained machine learning. The input of the trained machine learning may be: tools geometries, distance traveled by the tool at each contact point, the material, the cutting speed, type of optical element, thickness, type of surface, type of blocking, cinematic signature of the cutting machine. The output may be the state of the cutting tool edge or the compensated surface.

According to another embodiment taken alone or in combination, the step of generating a compensation map by using a transfer function, may comprises further
- providing a compensation model to compensate for defects produced by a manufacturing method and not by the cutting tools
- generating a compensation map by using a transfer function and the provided compensation model.

The method for this embodiment and more particularly the compensation model is described in the application FR2984197.

The following step of the method of the present disclosure is to determine a compensated surface description data 36 from the generated compensation map and the surface description data.

Indeed, the final purpose of this step is to adjust the tool position and the tool path taking into account measured or predicted local edge wear effects, in particular Z direction. By doing so, it is possible to eradicate optical power rejects due to cutting tool shape or material.

To obtain the compensated surface description data, we add the surface description data of the optical element and the computed compensation map (obtained from a predictive model, or a tool or a surface characterization). This new surface is sent to the machine to modify the tool's axis trajectory.

The compensated surface description data is obtained from a transfer function based on the tool contact point, and optionally the cutting conditions (such as the cutting speed, acceleration, vibration, ...) and/or the material properties (such as Young modulus, ...).

The compensated surface description data could be shorter than the description surface data, this is why it could be extrapolated and/or smoothed (optimized) to avoid the edge effect, or noisy surface.

Finally, this compensation map is added to the surface description data with the element 35 as illustrated in Figure 3.

Although representative processes and devices have been described in detail herein, those skilled in the art will recognize that various substitutions and modifications may be made without departing from the scope of what is described and defined by the appended claims.

## Claims

1. A computer-implemented method for determining a compensated surface description data intended to be loaded into a surfacing machine (1) to obtain a surface of an optical element by cutting a blank (10) with a cutting tool (24) of the surfacing machine (1), the method comprising:
- providing a surface description data (30),
the surface description data representing the surface of the optical element;
- providing contact data from the surface description data (32),
the contact data representing the contact points to obtain with the cutting tool (24)
the surface represented by the surface description data,
the contact point (25', 25") being the contact point between the cutting tool (24) and the surface (12, 12', 12") of the blank (10) to obtain the surface of the optical element, and
the contact point being defined in a cutting tool coordinate system;
- generating a compensation map (341, 342) by using a transfer function (34),
the input of the transfer function being at least the contact data and the output of
the transfer function being the compensation map;
- determining a compensated surface description data (36) from the generated compensation map and the surface description data.

2. A computer-implemented method according to claim 1, wherein the step of generating a compensation map, comprises further:
- providing a material description data,
the material description data representing the material of the cutting tool and/or the material of the blank and/or the interaction between the material of the blank and of the cutting tool during the cutting of the blank to obtain the optical element,
- determining the transfer function based at least on the provided material description data.

3. A computer-implemented method according to claims 1 or 2, wherein the step of generating a compensation map, comprises further:
- providing a reference element description data,
the reference element data representing the surface of an element previously cut by the cutting tool,
- determining the transfer function based at least on the provided reference element description data.

4. A computer-implemented method according to claims 2 and 3, wherein the reference element description data provides the material description data.

5. A computer-implemented method according to any of preceding claims, wherein the step of generating a compensation map, comprises further:
- providing a predictive model,
the predictive model predicting a wear of the cutting tool in given conditions,
- determining the transfer function based at least on the predicted wear of the cutting tool.

6. A computer-implemented method according to claim 5, wherein the predictive model is a trained machine learning.

7. A computer-implemented method according to any of preceding claims, wherein the step of generating a compensation map, comprises further:
- providing a cutting speed and/or a cutting depth at each contact point;
- determining the transfer function based at least on the provided cutting speed.

8. A computer-implemented method according to any of preceding claims, wherein the optical element is an ophthalmic lens, an ophthalmic semi-finished lens or a mold intended to be used for the manufacturing of an ophthalmic lens.

9. A computer-implemented method according to any of preceding claims, comprising further:
- providing an optical power description data,
the optical power description data representing the repartition of the optical power of the optical element;
- providing an opposite surface description data,
the opposite surface description data representing the opposite surface of the surface of the optical element to be obtained;
wherein the step of providing a surface description data comprises:
- determining the surface description data from the opposite surface description data and the optical power description data.

10. A computer-implemented method according to any of preceding claims, wherein the steps of providing a contact data comprising further:
- providing a cutting tool description data to provide the contact data,
the cutting tool description data representing at least a part of an edge of the cutting tool, said edge of the cutting tool being intended to be in contact with the surface of the blank to obtain the surface of the optical element.

11. A surfacing machining for surfacing a blank to obtain a surface of an optical element by cutting a blank with a cutting tool of the surfacing machine, the system comprising
a cutting tool to cut the blank to obtain a surface of an optical element,
a computer, and
a computer program product comprising a series of instructions,
wherein said instructions, when loaded in the computer, are capable of implementing the steps of a method for determining a compensated surface description data intended to be loaded into the surfacing machine,
the method comprising:
- providing a surface description data,
the surface description data representing the surface of the optical element;
- providing contact data from the surface description data,
the contact data representing the contact points to obtain with the cutting tool the surface represented by the surface description data,
the contact point being the contact point between the cutting tool and the surface of the blank to obtain the surface of the optical element, and
the contact point being defined in a cutting tool coordinate system;
- generating a compensation map by using a transfer function,
the input of the transfer function being at least the contact data and the output of
the transfer function being the compensation map;
- determining a compensated surface description data from the generated compensation map and the surface description data.

12. A surfacing machine according to claim 11 wherein the method comprises further
- providing a material description data,
the material description data representing the material of the cutting tool and/or the material of the blank and/or the interaction between the material of the blank and of the cutting tool during the cutting of the blank to obtain the optical element,
- determining the transfer function based at least on the provided material description data.

13. A surfacing machine according to claims 11 or 12, comprising further
a reference sensor to probe at least one reference element and to generate a reference element description data,
the reference element being obtained from a blank surfaced with the cutting tool of the system,
the transfer function being determined based at least on the provided reference element description data.

14. A system according to any claims 11 to 13, comprising further
a cutting tool sensor to probe the cutting tool, in order to provide the surfacing tool description data.
